# EUROPEAN PATENT APPLICATION

(11) **EP 4 733 956 A1**
(43) Date of publication of application: **29.04.2026**
(21) Application number: 25170761.8
(22) Date of filing: 15.04.2025
(51) Int. Cl.: G06F 16/903, G06N 20/00

(54) **DYNAMIC LEAN TRANSFORMERS**

(30) Priority: 24.10.2024 US 202418926123
(71) Applicant: Intuit Inc., Mountain View, CA 94043 (US)
(72) Inventor: VETZLER, Matan, Mountain View, 94043 (US); ARDAZI, Shai, Mountain View, 94043 (US); AZROEL, Lior Vassertail, Mountain View, 94043 (US); COHEN, Linoy, Mountain View, 94043 (US)
(74) Representative: D Young & Co LLP

(57) **Abstract**

A system and method for dynamically optimizing large language model (LLM) inference by selectively deactivating layers based on query complexity. A multi-label classifier is trained on diverse user queries and their optimal layer configurations. During inference, the classifier analyzes incoming queries to predict which LLM layers can be safely deactivated without compromising output quality. The system processes user queries through the LLM with the predicted layer configuration, reducing computational resources while maintaining accuracy. A database stores historical queries, layer configurations, and performance metrics for continuous system improvement.

## Description

### BACKGROUND

Large language models (LLMs) have become increasingly powerful and effective for various natural language processing tasks, such as question answering, text generation, and language translation. These models typically consist of numerous layers and complex attention mechanisms, allowing them to process and understand human language with remarkable accuracy. As LLMs continue to grow in size and capability, they have found applications in diverse fields, including customer service, content creation, and information retrieval.

However, the computational complexity of LLMs poses significant challenges in terms of resource utilization and latency, particularly for real-time applications. The sheer number of parameters and layers in these models often results in high computational costs and increased processing time, limiting their practical deployment in resource-constrained environments. Additionally, current approaches to optimize LLM inference, such as static pruning or constant layer deactivation, fail to account for the varying complexity of different user queries, potentially leading to suboptimal performance across diverse inputs. These limitations hinder the widespread adoption of LLMs in scenarios where rapid response times and efficient resource management are beneficial.

### SUMMARY

Particular aspects are set out in the appended independent claims. Various optional embodiments are set out in the dependent claims.

Embodiments disclosed herein solve the aforementioned technical problems and may provide other technical solutions as well. Contrary to conventional techniques, the disclosed solution includes a novel method and system for dynamically optimizing large language model inference by selectively deactivating layers based on query complexity.

An example embodiment comprises a method for optimizing language model inference, comprising receiving, by a multi-label classifier, a user query, analyzing, by the multi-label classifier, the user query to determine a layer configuration for a large language model (LLM), wherein the layer configuration specifies which layers of the LLM to activate or deactivate, configuring, by the multi-label classifier, the LLM to activate or deactivate the layers according to the layer configuration, processing, by the LLM, the user query according to the layer configuration to generate a response, and outputting the generated response.

An example embodiment comprises a system for optimizing language model inference, comprising a large language model (LLM), and a multi-label classifier configured to receive a user query, analyze the user query to determine a layer configuration for the LLM, wherein the layer configuration specifies which layers of the LLM to activate or deactivate, configure the LLM to activate or deactivate the layers according to the layer configuration, process the user query according to the layer configuration to generate a response, and output the generated response.

### BRIEF DESCRIPTION OF THE DRAWINGS

So that the present disclosure can be understood in detail, a more particular description of the disclosure, briefly summarized above, may be made by reference to example embodiments, some of which are illustrated in the appended drawings. It is to be noted, however, that the appended drawings illustrate only example embodiments of this disclosure and are therefore not to be considered limiting of its scope, for the disclosure may apply to other equally effective example embodiments.
FIG. 1 illustrates a block diagram of a system for dynamic layer deactivation in language models, according to aspects of the present disclosure.
FIG. 2 illustrates a block diagram of a system for processing user queries using a large language model with dynamically deactivatable layers, according to aspects of the present disclosure.
FIG. 3 illustrates a flowchart of a method for training a multi-label classifier to optimize layer deactivation in large language models, according to aspects of the present disclosure.
FIG. 4 illustrates a flowchart of a method for layer deactivation experiments in a large language model, according to aspects of the present disclosure.
FIG. 5 illustrates a flowchart of a method for processing user queries using a large language model with dynamic layer deactivation, according to aspects of the present disclosure.
FIG. 6 illustrates a flowchart of a method for dynamically configuring layers of a large language model based on user queries, according to aspects of the present disclosure.
FIG. 7 illustrates a flowchart of a method for updating and maintaining a system using a multi-label classifier for dynamic layer deactivation, according to aspects of the present disclosure.
FIG. 8 illustrates a block diagram of a system with a software stack, according to aspects of the present disclosure.

### DETAILED DESCRIPTION OF SEVERAL EMBODIMENTS

The present disclosure addresses computational inefficiency in large language models (LLMs) by utilizing a multi-label classifier to dynamically and selectively deactivate layers without compromising performance. For example, the present disclosure provides a system and method for dynamically optimizing the inference process in LLMs by selectively deactivating layers based on the complexity of user queries. This dynamic layer deactivation approach may be facilitated by a multi-label classifier, which may be trained to predict which layers of the LLM can be safely deactivated for a given query without compromising the quality of the model's output. By selectively deactivating layers that are not necessary for processing a particular query, the system can significantly reduce computational overhead and latency, making it more practical for real-time applications.

For instance, in a customer support chatbot application powered by an LLM, the system can efficiently handle a wide range of customer inquiries, from simple product availability checks to complex troubleshooting scenarios. The multi-label classifier may analyze each incoming query and predict the improved (e.g. optimal) layer configuration for the LLM, allowing the chatbot to provide high-quality responses while minimizing resource usage. This dynamic and adaptive approach to layer deactivation represents a significant advancement in the field of natural language processing and machine learning, offering potential benefits in terms of computational efficiency, performance, and practical deployment of LLMs.

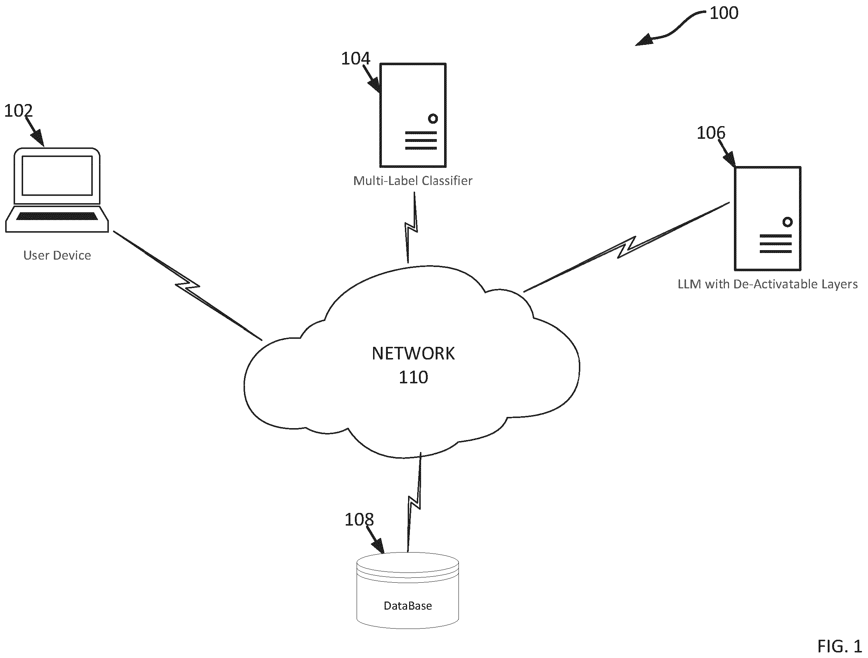

Referring to FIG. 1, a block diagram illustrates a system 100 for dynamic layer deactivation in language models. The system 100 may include a user device 102, a multi-label classifier 104, an LLM 106, a database 108, and/or a network 110.

The user device 102 may be any type of computing device capable of inputting user queries or requests. In some cases, the user device 102 may be a personal computer, a laptop, a tablet, a smartphone, or any other type of electronic device capable of communicating with the system 100 over the network 110.

The multi-label classifier 104 may be a server or processing unit that analyzes incoming queries to determine which layers of the LLM 106 are to be activated or deactivated. In some aspects, the multi-label classifier 104 may be trained on a diverse dataset of user queries and their corresponding improved (e.g. optimal) layer configurations. This training process allows the multi-label classifier 104 to recognize patterns in query complexity and content, enabling it to make real-time predictions about which layers are beneficial for processing a given input.

The LLM 106 may be another server or processing unit. This component represents the large language model with layers that can be selectively activated or deactivated based on the classifier's output. The LLM 106 may be a complex model with numerous layers and intricate attention mechanisms, making it computationally expensive to run. By selectively deactivating layers that are not necessary for processing a particular query, the system 100 can significantly reduce computational overhead and latency.

The database 108 may be a storage unit that stores historical queries, layer configurations, and other relevant data for the system's operation. In some cases, the database 108 may store a diverse dataset of user queries representing a wide range of complexity levels and topics relevant to the LLM's application domain. The database 108 may also store the improved (e.g. optimal) layer configurations for each query, which are determined through a systematic process of layer deactivation experiments.

The network 110 may be a communication infrastructure that connects the components of the system 100. The network 110 may facilitate data transfer between the user device 102, multi-label classifier 104, LLM 106, and/or database 108. In some aspects, the network 110 may be a local area network (LAN), a wide area network (WAN), the internet, or any other type of network that enables communication between the components of the system 100.

In operation, a user may input a query via the user device 102. The query may be then transmitted over the network 110 to the multi-label classifier 104. The multi-label classifier 104 may analyze the query and predict which layers of the LLM 106 can be deactivated without compromising the quality of the model's output. The LLM 106 may process the query with the specified layers deactivated, and the resulting response may be sent back to the user device 102 over the network 110. The system 100 thus provides an efficient and effective way to process user queries using large language models, optimizing computational resources while maintaining model accuracy.

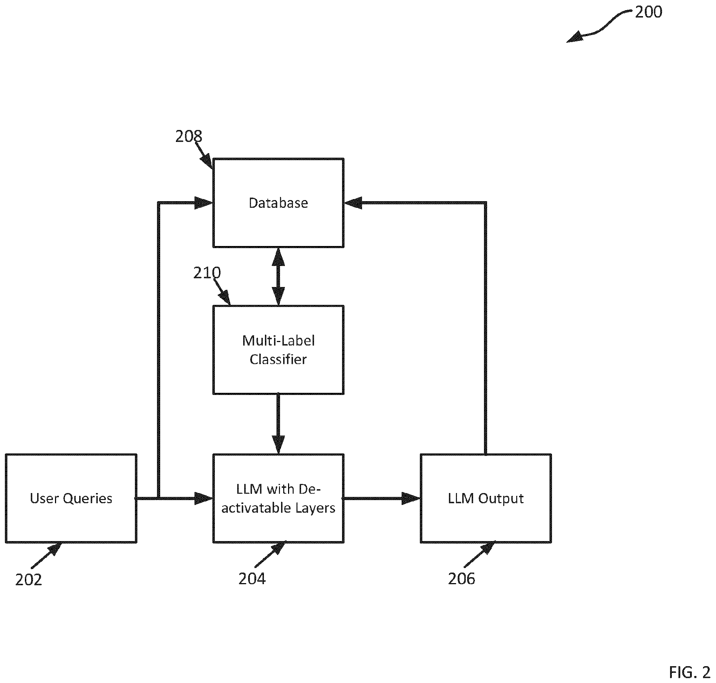

Referring to FIG. 2, a block diagram illustrates a system 200 for processing user queries using an LLM with dynamically deactivatable layers. FIG. 2 depicts an example of a functional block diagram of the interactions/interconnections between devices in system 100.

The system 200 may include a user query input module 202, an LLM 204, an LLM output module 206, a database 208, and/or a multi-label classifier 210. In some aspects, these components may correspond to and interact in a similar manner as the user device 102, LLM 106, database 108, and/or multi-label classifier 104 of system 100 shown in FIG. 1.

The user query input module 202 may generally be configured to receive user queries. In some cases, the user query input module 202 may be a software component and/or a hardware interface that allows users to input queries or requests to the system 200. The user query input module 202 may forward the received user queries to the LLM 204 and/or the multi-label classifier 210 for processing.

The LLM 204 may be a complex model with numerous layers and intricate attention mechanisms. In some aspects, the LLM 204 may be configured to process user queries with layers activated or deactivated based on the layer configuration determined by the multi-label classifier 210. The LLM 204 may generate an output based on the processed user query, which may be then sent to the LLM output module 206.

The LLM output module 206 may be configured to generate a final response to the user query based on the output of the LLM 204. In some cases, the LLM output module 206 may format the output for presentation to the user or for further processing by other components of the system 200.

The database 208 may be a storage unit that stores historical queries, their corresponding improved (e.g. optimal) layer configurations, and/or other relevant data for the operation of the system 200. In some aspects, the database 208 may be connected bidirectionally to both the multi-label classifier 210 and the LLM output module 206. The multi-label classifier 210 may retrieve information from the database 208 to inform its decisions, while the LLM output module 206 may update the database 208 with new query data and performance metrics.

The multi-label classifier 210 may be a server or processing unit that analyzes incoming queries to determine which layers of the LLM 204 are to be activated or deactivated. In some cases, the multi-label classifier 210 may be trained on a diverse dataset of user queries and their corresponding improved (e.g. optimal) layer configurations. This training process allows the multi-label classifier 210 to recognize patterns in query complexity and content, enabling it to make real-time predictions about which layers are beneficial for processing a given input. The multi-label classifier 210 may send this layer configuration information to the LLM 204, which may process the user query with the specified layers deactivated.

LLM 204, upon receiving the layer configuration from the multi-label classifier 210, may process the user query according to the specified layer configuration. In some aspects, the LLM 204 may be a complex model with numerous layers and intricate attention mechanisms. The layers of the LLM 204 may be selectively activated or deactivated based on the layer configuration determined by the multi-label classifier 210. This dynamic layer deactivation approach allows the LLM 204 to process user queries with reduced computational resources, thereby reducing computational overhead and latency.

Once the LLM 204 processes the user query, it may generate an output based on the processed query. This output may then be sent to the LLM output module 206. The LLM output module 206 may be configured to generate a final response to the user query based on the output of the LLM 204. In some cases, the LLM output module 206 may format the output for presentation to the user or for further processing by other components of the system 200.

The system 200 may also include a feedback mechanism for continuous improvement. For instance, the system 200 may include an LLM performance evaluator (not shown in FIG. 2) that may compare the output of the LLM 204 to expected results or gold standard responses. This comparison may help assess the performance of the LLM 204 with the deactivated layers and provide insights into the effectiveness of the dynamic layer deactivation approach.

Furthermore, the system 200 may include a feedback loop from the LLM performance evaluator to the multi-label classifier 210. This feedback loop may allow the multi-label classifier 210 to refine its predictions over time based on the performance feedback. For example, if the LLM performance evaluator determines that the output quality of the LLM 204 has decreased due to layer deactivations, this information may be fed back to the multi-label classifier 210. The multi-label classifier 210 may then adjust its layer deactivation predictions for similar future queries to avoid the same performance degradation.

In some aspects, the database 208 may be updated with new query data and performance metrics from the LLM output module 206 and the LLM performance evaluator. This updated information may be used by the multi-label classifier 210 to inform its future decisions, thereby enabling the system 200 to adapt to new query patterns and maintain improved (e.g. optimal) performance over time.

Database 208 may also store user queries, LLM output, pre-computed layer configurations, and/or frequently asked queries or similar query types. In some aspects, the multi-label classifier 210 may retrieve these pre-computed layer configurations from the database 208 when it receives a user query that matches or may be similar to a query in the database 208. This may allow the system 200 to quickly process common or recurring queries, reducing the computational overhead of the multi-label classifier 210 and further optimizing system performance.

In addition to storing query data and layer configurations, the database 208 may also maintain version information for the LLM 204 and the multi-label classifier 210. This version information may include details about the training data used, the training parameters, the performance metrics, and/or any updates or modifications made to the models. In some cases, the system 200 may use this version information to ensure compatibility between the LLM 204 and the multi-label classifier 210. For instance, if the LLM 204 is updated or retrained, the system 200 may check the version information in the database 208 to determine whether the multi-label classifier 210 also needs to be updated or retrained to match the new version of the LLM 204.

Furthermore, the version information stored in the database 208 may enable easy rollbacks if needed. For example, if an update to the LLM 204 or the multi-label classifier 210 results in decreased performance or compatibility issues, the system 200 may use the version information in the database 208 to revert back to a previous version of the model. This feature may enhance the reliability and robustness of the system 200, allowing it to maintain improved (e.g. optimal) performance even in the face of changes or updates to the models.

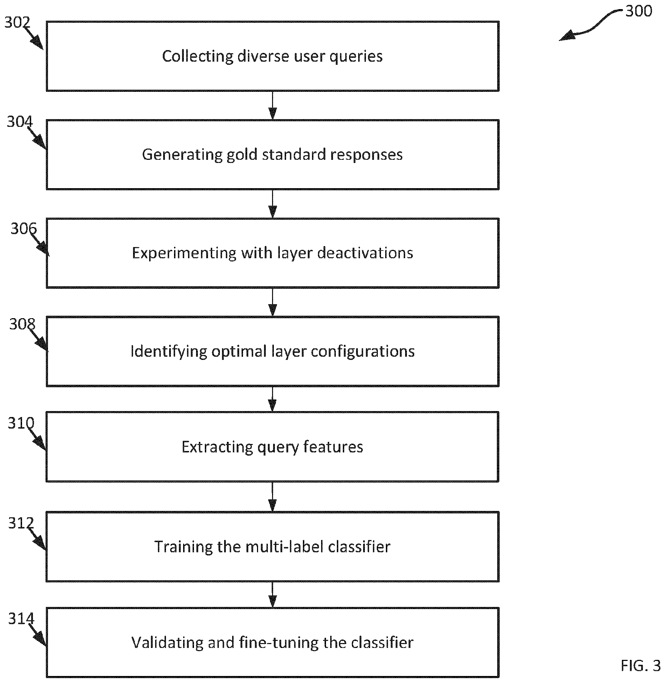

Referring to FIG. 3, a flowchart illustrates a method 300 for training and validating a multi-label classifier to optimize layer deactivation in LLMs.

The method 300 may begin with step 302, which involves collecting diverse user queries. In some aspects, the user queries may be collected from various sources, such as online platforms, customer support chat logs, and/or other databases. The collected user queries may represent a wide range of complexity levels and topics relevant to the application domain of the LLM. This diverse dataset of user queries may provide a comprehensive basis for training the multi-label classifier.

In some cases, the collection process may involve data cleaning and preprocessing techniques to ensure the quality and consistency of the collected queries. This may include removing duplicates, standardizing formats, and/or categorizing queries based on their characteristics. Additionally, the collection process may be ongoing, with new queries continuously added to the dataset to keep it up-to-date with evolving user needs and language patterns.

Following the data collection, step 304 may include generating gold standard responses for the collected queries. In some cases, each query in the dataset may be processed through a fully activated LLM to generate a gold standard response, where the fully activated LLM has all layers activated. This gold standard response may serve as the benchmark for quality and accuracy during the subsequent training process. By comparing the outputs of the LLM with different layer configurations to the gold standard response, the system can identify the improved (e.g. optimal) layer configuration for each query.

The generation of gold standard responses may involve multiple iterations and quality checks to ensure their accuracy and relevance. In some aspects, human experts may review and refine the generated responses to incorporate domain-specific knowledge and nuances that the LLM might miss. The gold standard responses may also be periodically updated to reflect changes in information or best practices within the application domain.

The method 300 then proceeds to step 306, where experimenting with layer deactivations occurs. For each query, the system may systematically experiment with various combinations of layer deactivations. This may involve running the LLM multiple times with different subsets of layers active, comparing each output to the gold standard response. In some aspects, the system may use a selection algorithm or a random process to determine which layers to deactivate during each experiment.

The layers that can be deactivated may include attention layers, feed-forward layers, embedding layers, and output layers. For example, in a transformer-based LLM architecture, the system may experiment with deactivating some of the self-attention layers or feed-forward layers in each transformer block. The embedding layers, which convert input tokens into vector representations, may also be candidates for selective deactivation. Layers are typically deactivated by setting their outputs to zero or by skipping their computations entirely. In some cases, the system may implement a "soft" deactivation approach, where layer outputs are scaled down rather than completely zeroed out. This allows for a more nuanced exploration of layer importance. For instance, the system may start by deactivating a predetermined percentage of layers and gradually increasing the number of deactivated layers in subsequent experiments. It may also explore different patterns of deactivation, such as deactivating alternate layers, deactivating layers from the bottom up, or focusing on specific types of layers. The system may track the performance impact of each deactivation configuration, considering factors such as output quality, inference speed, and resource utilization. This data may be used to identify optimal layer configurations for different types of queries, balancing computational efficiency with model performance.

The system may employ parallel processing techniques during experimentation, thereby distributing the experiments across multiple computing nodes. Additionally, the system may implement adaptive sampling strategies to focus on promising layer configurations, potentially reducing the total number of experiments while still identifying improved (e.g. optimal) configurations.

Step 308 involves identifying improved (e.g. optimal) layer configurations based on the experiments conducted in step 306. The system may identify the largest subset of deactivated layers that still maintains a response quality within an acceptable threshold compared to the gold standard. This improved (e.g. optimal) configuration may be recorded for each query, providing a mapping between query features and improved (e.g. optimal) layer configurations. In some cases, an acceptable threshold may be defined as a predetermined % or higher of accuracy compared to the gold standard response. For example, if the gold standard achieves 100% accuracy on a set of test queries, an acceptable threshold may allow for up to 5% reduction in accuracy while still considering the layer configuration as improved (e.g. optimal). In other aspects, the acceptable threshold may be based on maintaining a certain level of semantic similarity or preserving key information content, rather than strict accuracy. The system may also consider multiple thresholds for different performance metrics, such as response quality, inference speed, and resource utilization, to determine an overall acceptable configuration.

In some cases, the identification of improved (e.g. optimal) layer configurations may involve multi-objective optimization, balancing factors such as response quality, processing speed, and resource utilization. The system may employ machine learning algorithms, such as reinforcement learning, to efficiently search for optimal solutions. An improved (e.g. optimal) solution may be a layer configuration that achieves a desired balance between response quality and computational efficiency for a given query type. The system may use techniques like Bayesian optimization or evolutionary algorithms to explore the space of possible layer configurations. For example, it may start with a baseline configuration and iteratively adjust the activation/deactivation of different layers, evaluating the performance impact of each change. The system may also employ techniques like cross-validation and ensemble methods to ensure the robustness of the identified solutions across different queries. These improved (e.g. optimal) configurations may be stored in a database for quick retrieval during inference time. The database may be periodically updated as new query patterns emerge or as the underlying language model is refined, ensuring that the system maintains improved (e.g. optimal) performance over time.

The process continues with step 310, which entails extracting query features from the collected queries. Relevant features may be extracted from each query, which may include length, complexity metrics, topic indicators, and other linguistic characteristics. For example, the length of the query may be measured in terms of word count or character count. Complexity metrics may include measures such as sentence structure complexity, use of technical terminology, or presence of nested clauses. Topic indicators may involve identifying key words or phrases that suggest the subject matter of the query. Other linguistic characteristics may include parts of speech analysis, sentiment analysis, or detection of idiomatic expressions. In some cases, semantic features may be extracted using techniques like word embeddings or latent semantic analysis to capture the meaning and context of the query. Additionally, the system may analyze query-specific attributes such as the presence of numerical values, dates, or named entities, which may provide insights into the type and complexity of information being requested. These extracted features may serve as the input to the multi-label classifier, allowing it to learn the relationship between query characteristics and the layers necessary for processing.

The feature extraction process may involve advanced natural language processing techniques, such as semantic analysis, named entity recognition, and sentiment analysis. In some aspects, the system may use pre-trained language models or word embeddings to capture semantic information from the queries. The extracted features may be normalized and scaled to ensure consistent input to the multi-label classifier. Additionally, feature selection techniques may be applied to identify informative features, potentially improving the classifier's performance and reducing computational overhead.

Step 312 involves training the multi-label classifier using the extracted features as input and the improved (e.g. optimal) layer configurations as output labels. This allows the classifier to learn the relationship between query characteristics and the layers necessary for processing. The classifier may be trained using various machine learning algorithms, such as decision trees, support vector machines, or neural networks. The training process may involve adjusting the parameters of the classifier to reduce (e.g. minimize) the difference between the predicted layer configurations and the actual improved (e.g. optimal) configurations in the training dataset.

In some cases, the training process may employ advanced techniques such as ensemble learning or deep learning to improve the classifier's performance. Cross-validation and regularization methods may be used to prevent overfitting and ensure the classifier generalizes well to new, unseen queries. The training process may also involve hyperparameter tuning, using techniques like grid search or Bayesian optimization to find an improved (e.g., optimal) configuration for the classifier.

Step 314 may include validating and fine-tuning the classifier to ensure its accuracy and performance. The trained classifier may be validated on a separate set of queries to ensure generalization. Fine-tuning may be performed to improve accuracy and adapt to specific use cases. This iterative training process allows the classifier to learn to predict which layers are beneficial for processing different types of queries, enabling dynamic and efficient layer deactivation during inference.

The validation and fine-tuning process may involve multiple iterations and may use various performance metrics to assess the classifier's effectiveness. In some aspects, the system may employ active learning techniques, where difficult-to-classify queries are identified and used to further refine the classifier. Additionally, the system may implement continuous learning mechanisms, allowing the classifier to adapt to changing query patterns and LLM updates over time. This ongoing refinement process helps maintain the classifier's accuracy and relevance in dynamic environments.

A use case is now described. In the context of a chatbot application for assisting with income tax filings, the method 300 for training a multi-label classifier to optimize layer deactivation in large language models may be applied as follows:

Step 302 may involve collecting diverse user queries. For an income tax filing chatbot, this may include gathering a wide range of taxpayer inquiries from various sources such as chat logs, email support tickets, and tax preparation software interactions. These queries may cover topics like deductions, credits, filing status, income reporting, and general tax law questions. The collection process may involve anonymizing taxpayer data and categorizing queries based on their complexity and subject matter.

In step 304, gold standard responses are generated for the collected queries. For the income tax filing chatbot, this may involve having experienced tax professionals or IRS experts craft ideal responses to each query. These responses may be reviewed and refined to ensure they accurately address the taxpayer's concerns, provide clear instructions, and maintain compliance with current tax laws and regulations.

Step 306 focuses on experimenting with layer deactivations. The chatbot system may run each tax-related query through the LLM multiple times, systematically deactivating different combinations of layers. For instance, it may start by deactivating layers that typically process low-level linguistic features for simple queries about tax filing deadlines, while keeping more complex reasoning layers active for queries about intricate deduction calculations.

In step 308, the system identifies improved (e.g. optimal) layer configurations based on the experiments. For the income tax filing chatbot, this may involve finding the configuration that provides accurate and helpful responses while minimizing computational resources. The system may determine that queries about standard deductions require fewer active layers compared to complex scenarios involving multiple sources of income or business expenses.

Step 310 involves extracting query features from the collected tax-related queries. This may include analyzing the length of the query, identifying key tax terms or form numbers, and assessing the complexity of the tax situation described. The system may also extract features related to the taxpayer's filing status or the urgency of the request given tax deadlines.

In step 312, the multi-label classifier may be trained using the extracted features and improved (e.g. optimal) layer configurations. For the income tax filing chatbot, this allows the classifier to learn patterns such as associating short, simple queries about tax return status with minimal layer activation, while complex queries about international tax treaties may require more extensive layer activation.

Step 314 may include validating and fine-tuning the classifier. In the context of the income tax filing chatbot, this may involve testing the classifier on a separate set of tax-related queries to ensure it accurately predicts the improved (e.g. optimal) layer configuration across various types of tax questions. The chatbot system may continuously fine-tune the classifier based on new taxpayer interactions and feedback, allowing it to adapt to changes in tax laws, new forms or schedules, and evolving taxpayer needs throughout the tax season.

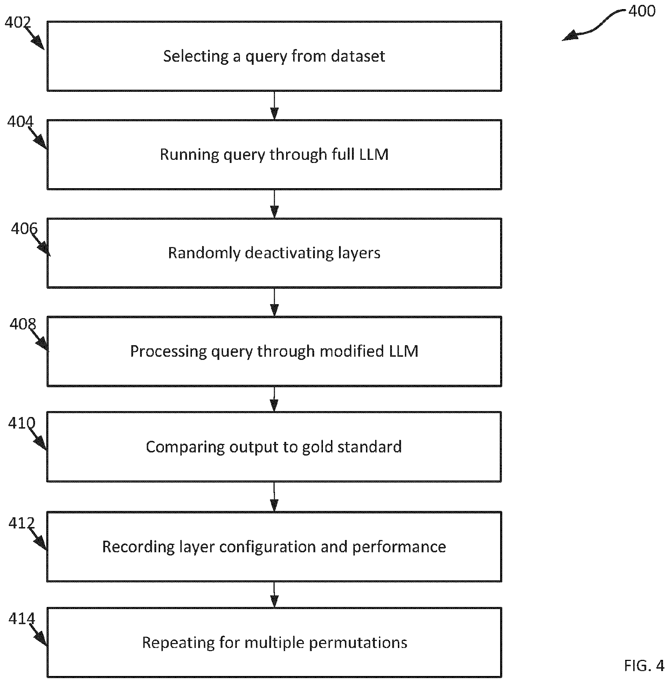

FIGS. 4, 5, and 6 provide further details on various aspects of the steps outlined in FIG. 3. Together, these figures offer a comprehensive view of the experimentation, application, and decision-making processes involved in optimizing LLM performance through dynamic layer deactivation.

Referring to FIG. 4, a flowchart illustrates a method 400 of layer deactivation experiments in a LLM. The method 400 may begin with step 402, where a query may be selected from a dataset. In some aspects, the dataset may include a diverse collection of user queries representing a wide range of complexity levels and topics relevant to the LLM's application domain. The selected query may be a specific user query that the system aims to process efficiently by dynamically deactivating layers of the LLM.

The selection process in step 402 may involve various strategies to ensure a representative sample of queries. In some cases, the system may use stratified sampling techniques to select queries from different categories or complexity levels. For example, the system may categorize queries based on factors such as length, topic, or linguistic features, and then select a proportional number of queries from each category. This approach may help ensure that the sample includes a diverse range of query types. Additionally, the system may employ active learning approaches to prioritize queries that are likely to provide informative results for optimizing layer configurations. For instance, the system may initially select a small batch of queries, process them through the LLM, and analyze the results. Based on this analysis, it may then select subsequent queries that are expected to yield the most valuable insights for layer configuration optimization. This iterative process may allow the system to efficiently explore the query space and identify optimal layer configurations for different query types. In some aspects, the selection process may also consider historical performance data. The system may prioritize queries that have previously led to significant improvements in layer configuration or those that have been challenging for the current configuration. This approach may help focus the experiments on areas where there is the most potential for optimization. The system may also implement a dynamic sampling strategy that adapts over time. As the system gains more knowledge about optimal layer configurations for different query types, it may adjust its sampling strategy to focus on unexplored or underperforming areas. This adaptive approach may help ensure that the system continues to improve and refine its layer configuration predictions as it processes more queries.

In step 404, the selected query may be run through the full LLM. The LLM may be a complex model with numerous layers and intricate attention mechanisms. In an example, the LLM 204 may be implemented as a neural network, which may include interconnected nodes, or "neurons," organized into layers. These layers may include an input layer, one or more hidden layers, and an output layer. Each layer in the neural network may perform specific computations on the input data, transforming it and passing it to subsequent layers. The layers referred to in the context of layer deactivation may correspond to these neural network layers. By selectively activating or deactivating certain layers within the neural network, the system may adjust the complexity and computational requirements of the LLM 204 based on the specific needs of each user query.

In some cases, the LLM may be fully activated, meaning all layers of the LLM are active during the processing of the query. The output generated by the fully activated LLM may serve as a gold standard response, which represents the benchmark for quality and accuracy.

During step 404, the system may also collect detailed metrics on the LLM's performance, such as processing time, memory usage, and intermediate activations of each layer. This information may be beneficial for understanding the contribution of each layer to the final output and for identifying potential candidates for deactivation. In some aspects, the system may use techniques like gradient-based attribution methods to quantify the importance of each layer for the specific query being processed.

The method 400 then proceeds to step 406, where layers of the LLM are randomly deactivated. In some aspects, the multi-label classifier 104 may randomly select a subset of layers to deactivate based on metrics of the user queries. The deactivated layers may be those that are not necessary for processing the particular query, thereby reducing computational overhead and latency. The random deactivation process may involve systematically experimenting with different combinations of deactivated layers to identify configurations that maintain output quality while minimizing resource usage. In some cases, the system may employ probabilistic approaches, where each layer has a likelihood of being deactivated based on factors such as its position in the network or observed importance in previous experiments. The random deactivation may also be guided by heuristics or constraints, such as maintaining a minimum number of active layers or preserving layers known to be generally beneficial. This approach allows for a thorough exploration of possible layer configurations, potentially leading to more efficient processing of diverse query types.

The random deactivation process in step 406 may be guided by heuristics or constraints to ensure meaningful experiments. For instance, the system may impose limits on the minimum number of active layers or maintain layers that are known to be generally beneficial. In some cases, the system may use a probabilistic approach, where each layer has a probability of being deactivated based on its observed importance in previous experiments or its position in the network architecture.

Following this, in step 408, the query may be processed through the modified LLM with the deactivated layers. The modified LLM may process the query using the active layers, thereby utilizing fewer computational resources compared to the fully activated LLM. The output generated by the modified LLM may be compared to the gold standard response to assess the impact of the layer deactivation on the quality and accuracy of the output.

During step 408, the system may also monitor and record various performance metrics for the modified LLM, such as inference time, memory usage, and energy consumption. This information may be beneficial for quantifying the computational savings achieved through layer deactivation. In some aspects, the system may use techniques like knowledge distillation to further optimize the performance of the modified LLM, potentially compensating for any loss in accuracy due to layer deactivation.

Step 410 involves comparing the output of the modified LLM to the gold standard. In some cases, the system may use various metrics to compare the outputs, such as semantic similarity, style consistency, or other performance metrics. The comparison may help assess the performance of the LLM with the deactivated layers and provide insights into the effectiveness of the dynamic layer deactivation approach.

The comparison process in step 410 may involve sophisticated natural language processing techniques to evaluate the quality of the modified LLM's output. For instance, the system may use pre-trained language models or embedding techniques to measure semantic similarity between the modified output and the gold standard. In some aspects, the system may also consider task-specific metrics relevant to the LLM's application domain, such as factual accuracy for question-answering tasks or coherence for text generation tasks. The system may employ techniques like cosine similarity or Euclidean distance to quantify semantic similarity, with thresholds that may vary based on the specific use case. Lower thresholds of similarity may be considered acceptable for general language tasks, while more stringent thresholds may be applied for specialized domains requiring higher precision. The system may also utilize more advanced metrics like BLEU or ROUGE scores for tasks involving text generation, with various thresholds depending on the complexity of the task and desired output quality.

The method 400 then moves to step 412, where the layer configuration and performance are recorded. The layer configuration may specify which layers were active and which were deactivated during the processing of the query. The performance may be a measure of how closely the output of the modified LLM matches the gold standard response. This information may be stored in the database 108 for future reference and analysis.

In step 412, the system may also record additional metadata about the experiment, such as the characteristics of the input query, the specific random seed used for layer deactivation, and any notable observations during the process. This comprehensive recording may facilitate more in-depth analysis and pattern recognition across multiple experiments. In some cases, the system may use data visualization techniques to represent the relationship between layer configurations and performance metrics, aiding in the interpretation of results.

In step 414, the process may be repeated for multiple permutations of layer deactivations. The system may systematically experiment with various combinations of layer deactivations to explore a wide range of layer configurations. By comparing the outputs of the LLM with different layer configurations to the gold standard response, the system can identify the improved (e.g. optimal) layer configuration for each query. This iterative process allows the system to learn which layers are beneficial for processing different types of queries, enabling dynamic and efficient layer deactivation during inference.

The repetition process in step 414 may be guided by intelligent search strategies to efficiently explore the vast space of possible layer configurations. In some aspects, the system may use techniques like Bayesian optimization or evolutionary algorithms to adaptively select promising layer configurations based on the results of previous experiments. Additionally, the system may implement early stopping criteria to terminate the exploration for a given query once a satisfactory layer configuration may be found, balancing thoroughness with computational efficiency.

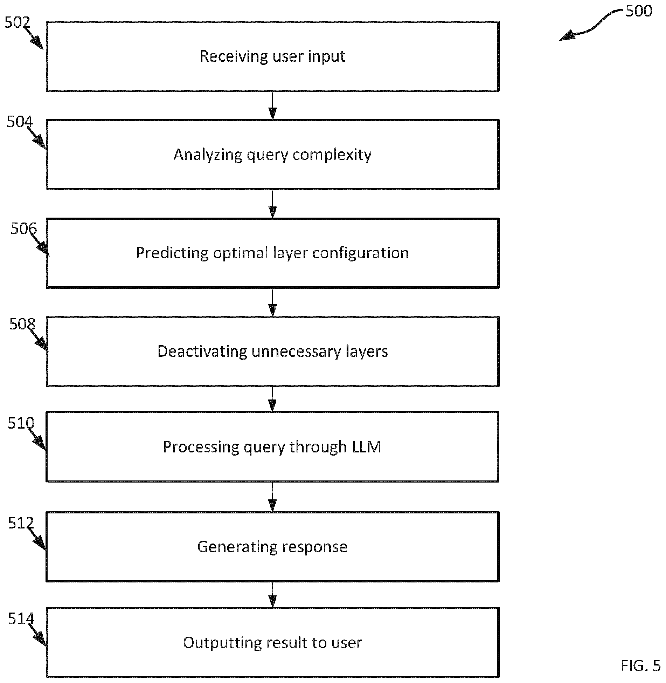

Referring to FIG. 5, a flowchart illustrates a method 500 for processing user queries using a LLM with dynamic layer deactivation.

The method 500 may begin with step 502, where user input may be received. In some aspects, the user input may be a query or request submitted by a user through a user device, such as a computer, smartphone, or tablet. The user query may be related to a specific task or topic relevant to the application domain of the LLM. For instance, in a customer support chatbot application, the user query may be a question about product availability, a request for troubleshooting assistance, or any other type of customer inquiry.

In some cases, the user input received in step 502 may undergo initial preprocessing before being passed to subsequent steps. This preprocessing may involve tokenization, where the input text may be broken down into individual words or subwords. Additionally, the system may perform language detection to identify the input language, allowing for appropriate handling of multilingual queries. The preprocessed input may then be vectorized or encoded into a format suitable for analysis by the multi-label classifier and processing by the LLM.

Following the receipt of user input, step 504 involves analyzing the query complexity. In some cases, the multi-label classifier 104 may analyze the user query to determine its complexity and content. The complexity analysis may involve assessing various characteristics of the query, such as its length, linguistic structure, topic indicators, or other relevant features. This analysis may help the multi-label classifier 104 understand the underlying objective and complexities of the user query, enabling it to make informed decisions about which layers of the LLM to activate or deactivate.

The complexity analysis in step 504 may employ advanced natural language processing techniques to extract meaningful features from the user query. For example, the system may use named entity recognition to identify specific entities mentioned in the query, which can provide insights into the query's domain and potential complexity. Sentiment analysis may be applied to gauge the emotional tone of the query, which may influence the depth of processing. Additionally, the system may utilize topic modeling algorithms to categorize the query into predefined topics, helping to determine relevant knowledge areas for processing the query.

The method 500 then proceeds to step 506, where the multi-label classifier 104 predicts the improved (e.g. optimal) layer configuration for the LLM. The layer configuration specifies which layers of the LLM are to be activated or deactivated for processing the user query. The multi-label classifier 104 may make this prediction based on the analyzed query complexity and the patterns it has learned during its training process. In some aspects, the multi-label classifier 104 may use a machine learning algorithm, such as a decision tree, support vector machine, or neural network, to predict the improved (e.g. optimal) layer configuration. The inputs provided to the classifier at step 506 may include features extracted from the user query, such as query length, complexity metrics, topic indicators, and linguistic characteristics. In some cases, the classifier may also consider contextual information, such as the user's history or preferences, if available. Additionally, the classifier may take into account performance metrics from previous similar queries, retrieved from the database 108, to inform its prediction. The multi-label classifier 104 may process these inputs through its trained model to generate a probability distribution over possible layer configurations, ultimately selecting the configuration with the highest likelihood of optimizing performance for the given query.

The prediction process in step 506 may involve a sophisticated ensemble approach, combining multiple machine learning models to enhance prediction accuracy. For instance, the system may employ a stacking technique, where predictions from various base models (e.g., decision trees, support vector machines, and neural networks) are used as inputs for a meta-model that makes the final layer configuration prediction. This ensemble approach may help capture different aspects of the query complexity and improve the robustness of the prediction. The system may also incorporate uncertainty estimation techniques to provide confidence scores for its predictions, allowing for more nuanced decision-making in subsequent steps.

In step 508, unnecessary layers of the LLM are deactivated according to the predicted layer configuration. The multi-label classifier 104 may configure the LLM to activate or deactivate the layers as specified in the predicted layer configuration obtained in step 506. This dynamic layer deactivation approach allows the LLM to process user queries with reduced computational resources, thereby reducing computational overhead and latency.

The layer deactivation process in step 508 may be implemented using advanced techniques to ensure smooth transitions between different layer configurations. For example, the system may employ gradual pruning methods, where unnecessary layers are progressively deactivated over multiple inference steps rather than all at once. This approach may help maintain stability in the LLM's output and prevent abrupt changes in performance. Additionally, the system may implement layer caching mechanisms, where the activations of recently used layers are temporarily stored, allowing for quick reactivation if needed in subsequent queries or if the initial layer configuration proves suboptimal.

The method 500 continues with step 510, where the user query may be processed through the LLM with the specified layer configuration. The LLM may process the user query using the active layers, generating an output based on the processed query. In some cases, the LLM may use a complex attention mechanism to process the query, taking into account the interdependencies between different parts of the query and the context in which it was made.

During the query processing in step 510, the system may employ adaptive computation techniques to further optimize the LLM's performance. For instance, the LLM may use early exit mechanisms, where intermediate outputs from layers are evaluated to determine if a satisfactory response can be generated without processing through remaining active layers. In some aspects, this evaluation may involve comparing the intermediate outputs to predefined thresholds or using machine learning models trained to assess output quality. The system may analyze metrics such as confidence scores, semantic similarity to expected outputs, or task-specific performance indicators to decide whether to exit early. If the intermediate outputs meet certain criteria, the system may bypass subsequent layers and generate the final response, potentially reducing computational time and resources. This approach may allow for even faster response times for simpler queries. Additionally, the system may implement dynamic batch processing, where multiple similar queries are grouped and processed together through the active layers, potentially improving throughput and efficiency for high-volume query scenarios.

Following the processing of the user query, step 512 involves generating a response based on the output of the LLM. The LLM output module 206 may generate a final response to the user query based on the output of the LLM. The generated response may be a text-based answer, a recommendation, a prediction, or any other type of response that fulfills the user's request.

The response generation process in step 512 may involve sophisticated post-processing techniques to enhance the quality and relevance of the output. For example, the system may employ a response ranking mechanism, where multiple candidate responses are generated and then ranked based on factors such as relevance, coherence, and confidence scores. The system may also apply style transfer techniques to adjust the tone and language of the response to match the user's communication style or preferences. Additionally, the response generation process may incorporate fact-checking mechanisms, cross-referencing the LLM's output with external knowledge bases to ensure accuracy and reliability of the information provided.

In step 514, the generated response may be output to the user. The system 100 may output the generated response to the user through the user device 102. The outputted response may provide the user with the information or assistance they requested, thereby fulfilling the purpose of the user query. The method 500 thus provides an efficient and effective way to process user queries using large language models, optimizing computational resources while maintaining model accuracy.

The output process in step 514 may incorporate adaptive presentation techniques to optimize the user experience. For instance, the system may use multimodal output methods, combining text, images, or even voice responses depending on the user's device capabilities and preferences. The system may also implement progressive loading techniques for longer responses, delivering relevant information first while loading additional details in the background. Furthermore, the output process may include interactive elements, allowing users to ask follow-up questions or request clarifications directly from the generated response, creating a more dynamic and engaging interaction with the LLM.

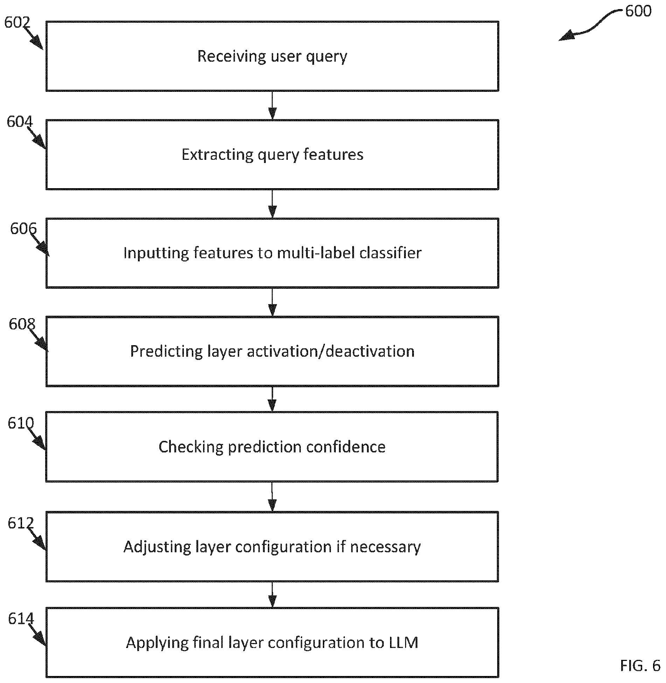

Referring to FIG. 6, a flowchart illustrates a method 600 for dynamically configuring layers of a LLM based on user queries.

The method 600 may begin with step 602, where a user query may be received. In some aspects, the user query may be a question, request, or command submitted by a user through a user device, such as a computer, smartphone, or tablet. The user query may be related to a specific task or topic relevant to the application domain of the LLM. For instance, in a customer support chatbot application, the user query may be a question about product availability, a request for troubleshooting assistance, or any other type of customer inquiry.

In some cases, the user query received in step 602 may undergo initial preprocessing before being passed to subsequent steps. This preprocessing may involve tokenization, where the input text may be broken down into individual words or subwords. Additionally, the system may perform language detection to identify the input language, allowing for appropriate handling of multilingual queries. The preprocessed input may then be vectorized or encoded into a format suitable for analysis by the multi-label classifier and processing by the LLM.

Following the receipt of the user query, step 604 involves extracting features from the user query. In some cases, the multi-label classifier 104 may analyze the user query to extract various features, such as its length, linguistic structure, topic indicators, and/or other relevant characteristics. These extracted features may provide insights into the complexity and content of the user query, enabling the multi-label classifier 104 to make informed decisions about which layers of the LLM to activate or deactivate.

The feature extraction process in step 604 may employ advanced natural language processing techniques to derive meaningful information from the user query. For example, the system may use named entity recognition to identify specific entities mentioned in the query, which can provide insights into the query's domain and potential complexity. Sentiment analysis may be applied to gauge the emotional tone of the query, which may influence the depth of processing. Additionally, the system may utilize topic modeling algorithms to categorize the query into predefined topics, helping to determine relevant knowledge areas for processing the query.

The method 600 then proceeds to step 606, where the extracted features are input to the multi-label classifier. The multi-label classifier 104 may use these features to predict the improved (e.g. optimal) layer configuration for the LLM. In some aspects, the multi-label classifier 104 may use a machine learning algorithm, such as a decision tree, support vector machine, or neural network, to process the input features and generate predictions.

The feature processing in step 606 may involve sophisticated techniques to enhance prediction accuracy. For instance, the system may employ feature scaling or normalization to ensure input features are on a comparable scale. It may also use dimensionality reduction techniques like principal component analysis to focus on informative aspects of the input. Additionally, the classifier may utilize ensemble methods, combining predictions from multiple models to improve robustness and accuracy.

In step 608, the multi-label classifier 104 predicts layer activation or deactivation for the LLM. This prediction specifies which layers of the LLM are to be activated or deactivated for processing the user query. The multi-label classifier 104 may make this prediction based on the patterns it has learned during its training process and the input features from the current query.

The prediction process in step 608 may involve probabilistic approaches to capture uncertainty in the classifier's decisions. For example, the system may output probability distributions over different layer configurations rather than a single deterministic prediction. This probabilistic approach may allow for more nuanced decision-making in subsequent steps and provide a measure of the classifier's confidence in its predictions.

In step 610, the multi-label classifier 104 may check the confidence level of the predicted layer configuration. The confidence level may be a measure of how certain the multi-label classifier 104 may be about its prediction. If the confidence level is below a predetermined threshold, the multi-label classifier 104 may flag the prediction for further review or adjustment.

The confidence checking process in step 610 may utilize various statistical and machine learning techniques to assess the reliability of the predicted layer configuration. For example, the system may employ bootstrap sampling to generate multiple predictions and calculate confidence intervals. Additionally, the system may use calibration techniques to ensure that the reported confidence levels accurately reflect the true probability of correct predictions.

In step 612, the system may adjust the layer configuration if necessary, based on the confidence check performed in the previous step. This adjustment process may involve fine-tuning the initially predicted layer configuration to optimize performance and resource utilization. The system may employ various strategies to refine the layer configuration, such as incrementally activating or deactivating layers, or exploring alternative configurations that have shown promising results in similar query types.

The adjustment process in step 612 may also incorporate feedback mechanisms to improve future predictions. For instance, the system may log the adjustments made and their corresponding outcomes, allowing the multi-label classifier to learn from these refinements over time. This adaptive approach may enable the system to continuously improve its layer configuration predictions, potentially reducing the need for adjustments in future queries of similar complexity or content.

In step 614, the multi-label classifier 104 may apply the final layer configuration to the LLM. The LLM may process the user query using the active layers, thereby utilizing fewer computational resources compared to a fully activated LLM. This dynamic layer deactivation approach allows the LLM to process user queries with reduced computational resources, thereby reducing computational overhead and latency.

The application of the final layer configuration in step 614 may involve sophisticated techniques to ensure smooth transitions between different layer configurations. For example, the system may employ gradual pruning methods, where unnecessary layers are progressively deactivated over multiple inference steps rather than all at once. This approach may help maintain stability in the LLM's output and prevent abrupt changes in performance. Additionally, the system may implement layer caching mechanisms, where the activations of recently used layers are temporarily stored, allowing for quick reactivation if needed in subsequent queries or if the initial layer configuration proves suboptimal.

The method 600 thus provides an efficient and effective way to process user queries using large language models, optimizing computational resources while maintaining model accuracy. By dynamically adjusting the active layers of the LLM based on the complexity and content of each user query, the method 600 can significantly improve the efficiency and practicality of deploying large language models in real-time applications.

In some aspects, the method 600 may be part of a larger system that continuously monitors and improves its performance. This may involve collecting data on the effectiveness of different layer configurations for various types of queries and using this information to refine the multi-label classifier's predictions over time. The system may also incorporate feedback mechanisms, where the quality of the LLM's outputs may be evaluated and used to adjust the layer configuration strategy. This ongoing learning and adaptation process may help ensure that the system remains effective and efficient as it encounters new types of queries and as the underlying LLM may be updated or fine-tuned.

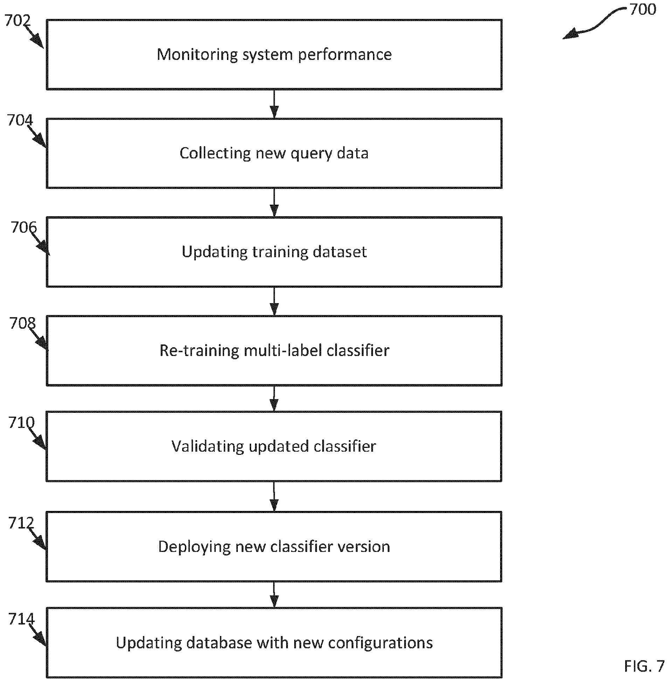

Referring to FIG. 7, a flowchart illustrates a method 700 for updating and maintaining a system that uses a multi-label classifier for dynamic layer deactivation in language models.

The method 700 may begin with step 702, which involves monitoring system performance. In some aspects, the system 100 may include a performance monitoring module that continuously tracks the performance of the LLM 204 and the multi-label classifier 210. The performance monitoring module may use various metrics to assess performance, such as query processing time, accuracy of the LLM's outputs, confidence levels of the multi-label classifier's predictions, and/or other relevant metrics. This continuous performance monitoring may allow the system 100 to identify any issues or inefficiencies in real time and take corrective actions as needed.

In some cases, the performance monitoring in step 702 may involve more advanced techniques beyond simple metric tracking. For instance, the system may employ anomaly detection algorithms to identify unusual patterns or deviations in performance. It may also utilize predictive analytics to forecast potential performance issues before they occur, allowing for proactive optimization. Additionally, the performance monitoring module may implement A/B testing capabilities, comparing different configurations or versions of the LLM and multi-label classifier to continuously refine and improve system performance.

Following performance monitoring, step 704 entails collecting new query data. In some cases, the system 100 may continuously collect new user queries and their corresponding LLM outputs as part of its normal operation. These new queries and outputs may be added to the training dataset stored in the database 108, expanding the diversity and coverage of the dataset. This continuous data collection may allow the system 100 to adapt to new query patterns and maintain improved (e.g. optimal) performance over time.

The data collection process in step 704 may involve sophisticated techniques to ensure the quality and relevance of the collected data. For example, the system may implement data cleaning algorithms to remove duplicates, correct errors, and/or standardize formats. It may also employ active learning strategies to prioritize the collection of queries that are informative for improving the system's performance. Furthermore, the system may utilize data augmentation techniques to generate synthetic queries based on existing patterns, potentially expanding the dataset's coverage of rare or edge cases.

The method 700 then proceeds to step 706, where the training dataset may be updated with the newly collected data. The multi-label classifier 210 may access the database 108 to retrieve the updated training dataset, which now may include the new user queries and their corresponding LLM outputs. This updated training dataset may provide a more comprehensive and up-to-date basis for training the multi-label classifier 210, allowing it to learn from recent user queries and LLM outputs.

In some aspects, the dataset update process in step 706 may involve more than simply appending new data. The system may implement intelligent data management strategies to maintain an improved (e.g. optimal) balance between historical and recent data. This may include techniques such as data weighting, where more recent queries are given higher importance during training. The system may also employ data pruning algorithms to remove outdated or less relevant queries, ensuring that the dataset remains manageable in size while still capturing beneficial patterns and trends.

In step 708, the multi-label classifier 210 may be re-trained using the updated training dataset. The re-training process may involve adjusting the parameters of the multi-label classifier 210 to minimize the difference between the predicted layer configurations and the actual improved (e.g. optimal) configurations in the updated training dataset. This re-training process may allow the multi-label classifier 210 to adapt to new query patterns and improve its prediction accuracy over time.

The re-training process in step 708 may employ advanced machine learning techniques to enhance the classifier's performance. For instance, the system may use transfer learning approaches to leverage knowledge from previous versions of the classifier, potentially speeding up the training process and improving generalization. It may also implement ensemble methods, combining multiple classifiers to create a more robust and accurate prediction model. Additionally, the system may utilize techniques like curriculum learning, where the classifier may be trained on progressively more complex examples, potentially leading to better overall performance.

Once re-trained, the updated classifier may be validated in step 710. The system 100 may evaluate the performance of the newly trained version of the multi-label classifier 210 using a separate validation dataset. This validation process may help ensure that the updated classifier maintains or improves upon the performance of the previous version. The system may use various metrics to assess the classifier's accuracy, such as precision, recall, and F1 score, as well as its ability to generalize to new, unseen queries.

The validation process in step 710 may involve sophisticated techniques to thoroughly assess the updated classifier's performance. For example, the system may employ cross-validation methods to obtain a more robust estimate of the classifier's performance across different subsets of the data. It may also use techniques like bootstrapping to generate confidence intervals for performance metrics, providing a measure of uncertainty in the classifier's predictions. Additionally, the system may conduct error analysis to identify specific types of queries or scenarios where the updated classifier may struggle, potentially informing further refinements or targeted improvements.

Following successful validation, the new version of the multi-label classifier 210 may be deployed in step 712. The system 100 may replace the current version of the multi-label classifier 210 with the newly trained and validated version, allowing it to analyze subsequent user queries using the updated prediction model. This deployment of the re-trained multi-label classifier 210 may ensure that the system 100 is using up-to-date and accurate prediction model for dynamic layer deactivation.

The deployment process in step 712 may involve several additional considerations to ensure a smooth transition. For example, the system may implement a canary deployment strategy, where the new classifier version may be initially rolled out to a small subset of users or queries to validate its performance in a real-world setting. It may also maintain a rollback mechanism, allowing for quick reversion to the previous version if any issues are detected. Furthermore, the system may employ techniques like shadow deployment, where the new classifier runs in parallel with the old one for a period of time, allowing for direct performance comparisons before full deployment.

In step 714, the database 108 may be updated with new configurations based on the newly deployed multi-label classifier 210. The system 100 may store the new layer configurations predicted by the re-trained multi-label classifier 210 in the database 108, along with the corresponding user queries and LLM outputs. This updated information in the database 108 can be used for future reference and analysis, helping the system 100 to continuously improve its performance and adapt to new query patterns.

The database update process in step 714 may involve sophisticated data management techniques to ensure efficient storage and retrieval of the new configurations. For instance, the system may implement indexing strategies to optimize query performance on the updated database. It may also employ data compression techniques to reduce storage requirements while maintaining quick access to frequently used configurations. Additionally, the system may implement a versioning system for the stored configurations, allowing for easy tracking of changes over time and facilitating historical analysis of the system's evolution.

In some aspects, the method 700 represents a continuous improvement cycle, allowing the system 100 to adapt to new query patterns, update its prediction model, and maintain improved (e.g., optimal) performance over time. By periodically updating the training dataset, re-training the multi-label classifier 210, validating the updated classifier, deploying the re-trained classifier, and.or updating the database 108, the system 100 can ensure that it is using accurate and efficient layer deactivation strategy for processing user queries.

This continuous improvement cycle may be further enhanced by incorporating feedback loops and adaptive learning mechanisms. For example, the system may implement reinforcement learning techniques to fine-tune the classifier's predictions based on the actual performance of the LLM with different layer configurations. It may also utilize meta-learning approaches to improve the efficiency of the re-training process itself, potentially allowing for more frequent updates with less computational overhead. Furthermore, the system may employ techniques like online learning, where the classifier may be continuously updated in real-time as new data becomes available, rather than in discrete re-training steps.

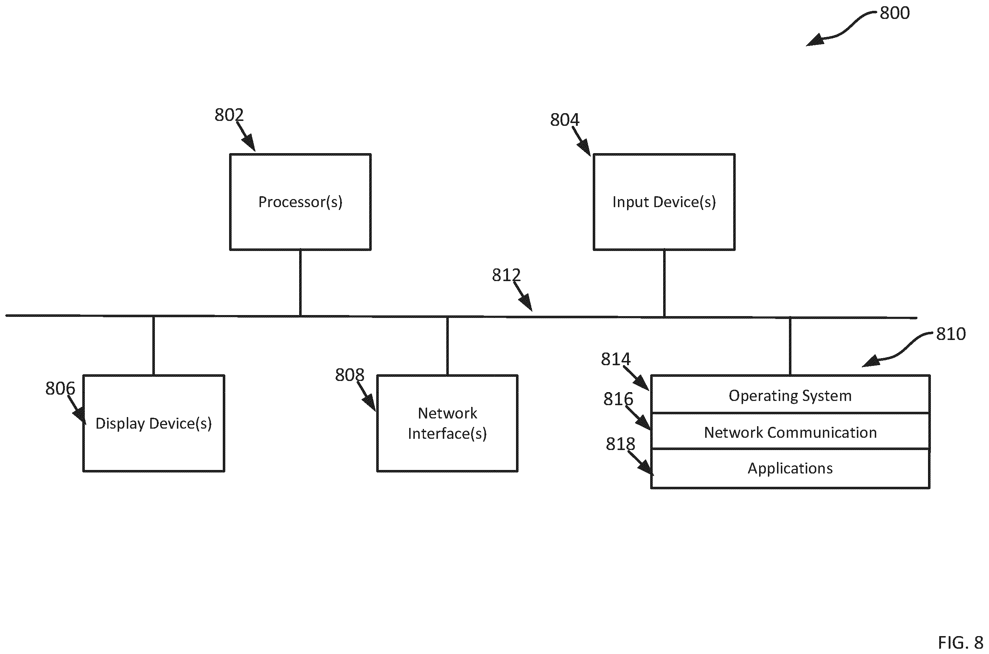

Referring to FIG. 8, a block diagram illustrates a system 800 that may be used to implement the methods described above. The system 800 may include several components interconnected via a system bus 812. The system 800 may include a processor 802, which may be a central processing unit (CPU), a graphics processing unit (GPU), or any other type of processing device. The processor 802 may be responsible for executing instructions and performing computations necessary for the operation of the system 800, including the processing of user queries and the operation of the multi-label classifier 104 and the LLM 106.

An input device 804 may be also connected to the system bus 812, allowing for user input to be received by the system 800. The input device 804 may be a keyboard, a mouse, a touchscreen, a microphone, or any other type of input device. In some cases, the input device 804 may be used by a user to input queries or requests to the system 800.

A display device 806 may be connected to the system bus 812, enabling visual output from the system 800. The display device 806 may be a monitor, a projector, a television screen, or any other type of display device. In some aspects, the display device 806 may present the responses generated by the LLM 106 to the user.

The system 800 also may include a network interface 808 connected to the system bus 812, facilitating communication with external networks or devices. The network interface 808 may be a network card, a modem, or any other type of network interface device. In some cases, the network interface 808 may enable the system 800 to communicate with the user device 102, the database 108, or other components of the system 100 over the network 110.

A software stack 810 is depicted, which may include multiple layers of software components. The software stack 810 may include an operating system 814 at its base, providing system functionalities. Above the operating system 814 is a network communication layer 816, which manages network-related operations. At the top of the software stack 810 are applications 818, representing various software programs that can run on the system 800. In some aspects, the applications 818 may include the multi-label classifier 104 and the LLM 106, which are responsible for processing user queries and dynamically deactivating layers of the LLM.

The system bus 812 serves as the central communication pathway, connecting the processor 802, input device 804, display device 806, network interface 808, and the software stack 810. This architecture allows for data and control signals to be exchanged between the various components of the system 800.

In operation, a user may input a query via the input device 804. The query may be then processed by the processor 802, which executes the instructions of the multi-label classifier 104 and the LLM 106 in the software stack 810. The multi-label classifier 104 analyzes the query and predicts which layers of the LLM 106 can be deactivated without compromising the quality of the model's output. The LLM 106 then processes the query with the specified layers deactivated, and the resulting response may be displayed to the user via the display device 806. The system 800 thus provides an efficient and effective way to process user queries using large language models, optimizing computational resources while maintaining model accuracy.

Therefore, from one perspective, there have been described a system and method for dynamically optimizing large language model (LLM) inference by selectively deactivating layers based on query complexity. A multi-label classifier is trained on diverse user queries and their optimal layer configurations. During inference, the classifier analyzes incoming queries to predict which LLM layers can be safely deactivated without compromising output quality. The system processes user queries through the LLM with the predicted layer configuration, reducing computational resources while maintaining accuracy. A database stores historical queries, layer configurations, and performance metrics for continuous system improvement.

Further examples of feature combinations taught by the present disclosure are set out in the following numbered clauses.

Clause 1. A method for optimizing language model inference, comprising: receiving, by a multi-label classifier of at least one processor, a user query; analyzing, by the multi-label classifier, the user query to determine a layer configuration for a large language model (LLM), the layer configuration specifies which layers of the LLM to activate or deactivate; configuring, by the multi-label classifier, the LLM to activate or deactivate the layers according to the layer configuration; processing, by the LLM configured according to the layer configuration, the user query to generate a response; and outputting the generated response.

Clause 2. The method of clause 1, wherein analyzing the user query comprises: extracting, by the multi-label classifier, features from the user query; comparing, by the multi-label classifier, the extracted features to predetermine features that correspond to a predetermined layer configuration; and selecting, by the multi-label classifier, the predetermined layer configuration as the layer configuration.

Clause 3. The method of clause 2, wherein the extracted features comprise at least one of query length, complexity metrics, topic indicators, or linguistic characteristics.

Clause 4. The method of clause 1 or 2, further comprising: checking, by the multi-label classifier, a confidence level of the determined layer configuration; and adjusting, by the multi-label classifier, the layer configuration in response to the confidence level being below a predetermined threshold.

Clause 5. The method of any preceding clause, further comprising: training, by the multi-label classifier, based on a training dataset including user queries and corresponding LLM outputs to determine predetermined layer configurations that correspond to predetermined query features.

Clause 6. The method of clause 5, further comprising: processing, by the multi-label classifier, each of the user queries in the training dataset through an LLM having all layers activated to generate a gold standard response; randomly deactivating, by the multi-label classifier, layers of the LLM; determining, by the multi-label classifier, performance of the LLM with the randomly deactivated layers; and selecting, by the multi-label classifier, the layer configuration with the randomly deactivated layers in response to the layer configuration meeting predetermined performance metrics.

Clause 7. The method of clause 6, further comprising: iteratively adjusting, by the multi-label classifier, the layer configuration and evaluating the performance of each iterative adjustment to identify an optimal layer configuration for each user query in the training dataset.

Clause 8. The method of any of clauses 5 to 7, further comprising: extracting, by the multi-label classifier, features from each user query in the training dataset; associating, by the multi-label classifier, the extracted features with an optimal layer configuration; and training, by the multi-label classifier, to predict optimal layer configurations based on the extracted features.

Clause 9. The method of any of clauses 5 to 8, further comprising: periodically updating, by the multi-label classifier, the training dataset with new user queries and their corresponding LLM outputs; re-training, by the multi-label classifier, using the updated training dataset; and deploying, by the multi-label classifier, the re-trained multi-label classifier for analyzing subsequent user queries.

Clause 10. The method of any of clauses 5 to 9, further comprising: categorizing, by the multi-label classifier, the user queries in the training dataset based on complexity and topic; determining, by the multi-label classifier, optimal layer configurations for each category of the user queries; and training, by the multi-label classifier, to predict layer configurations based on the categorization of the user queries.

Clause 11. A system for optimizing language model inference, comprising: a large language model (LLM); and at least one processor operating a multi-label classifier configured to: receive a user query, analyze the user query to determine a layer configuration for the LLM, the layer configuration specifies which layers of the LLM to activate or deactivate, configure the LLM to activate or deactivate the layers according to the layer configuration, process the user query by the LLM configured according to the layer configuration to generate a response, and output the generated response.

Clause 12. The system of clause 11, wherein the multi-label classifier is configured to: extract features from the user query; compare the extracted features to predetermined features that correspond to a predetermined layer configuration; and select the predetermined layer configuration as the layer configuration.

Clause 13. The system of clause 12, wherein the extracted features comprise at least one of query length, complexity metrics, topic indicators, or linguistic characteristics.

Clause 14. The system of clause 11, 12 or 13, wherein the multi-label classifier is further configured to: check a confidence level of the determined layer configuration; and adjust the layer configuration in response to the confidence level being below a predetermined threshold.

Clause 15. The system of any of clauses 11 to 14, wherein the multi-label classifier is further configured to: train based on a training dataset including user queries and corresponding LLM outputs to determine predetermined layer configurations that correspond to predetermined query features.

Clause 16. The system of clause 15, wherein the multi-label classifier is further configured to: process each of the user queries in the training dataset through an LLM having all layers activated to generate a gold standard response; randomly deactivate layers of the LLM; determine performance of the LLM with the randomly deactivated layers; and select the layer configuration with the randomly deactivated layers in response to the layer configuration meeting predetermined performance metrics.

Clause 17. The system of clause 16, wherein the multi-label classifier is further configured to: iteratively adjust the layer configuration and evaluate the performance of each iterative adjustment to identify an optimal layer configuration for each user query in the training dataset.

Clause 18. The system of any of clauses 15 to 17, wherein the multi-label classifier is further configured to: extract features from each user query in the training dataset; associate the extracted features with an optimal layer configuration; and train to predict optimal layer configurations based on the extracted features.

Clause 19. The system of any of clauses 15 to 18, wherein the multi-label classifier is further configured to: periodically update the training dataset with new user queries and their corresponding LLM outputs; re-train using the updated training dataset; and deploy the re-trained multi-label classifier for analyzing subsequent user queries.

Clause 20. The system of any of clauses 15 to 19, wherein the multi-label classifier is further configured to: categorize the user queries in the training dataset based on complexity and topic; determine optimal layer configurations for each category of the user queries; and train to predict layer configurations based on the categorization of the user queries.

While the foregoing is directed to example embodiments described herein, other and further example embodiments may be devised without departing from the basic scope thereof. For example, aspects of the present disclosure (e.g., modules) may be implemented in hardware or software or a combination of hardware and software. One example embodiment described herein may be implemented as a program product for use with a computer system. The program(s) of the program product defines functions of the example embodiments (including the methods described herein) and may be comprised (e.g. contained, stored and/or conveyed) on a variety of computer-readable media. Computer-readable media may include computer readable storage media and/or computer readable transmission media. Illustrative computer-readable storage media include, but are not limited to: (i) non-writable storage media (e.g., read-only memory

(ROM) devices within a computer, such as CD-ROM disks readably by a CD-ROM drive, flash memory, ROM chips, or any type of solid-state non-volatile memory) on which information is permanently stored; and (ii) writable storage media (e.g., floppy disks within a diskette drive or hard-disk drive or any type of solid-state random-access memory) on which alterable information is stored. Aa noted above a computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems. Such computer-readable media, when comprising (e.g. carrying, storing and/or conveying) computer-readable instructions that direct the functions of the disclosed example embodiments, are example embodiments of the present disclosure.

It will be appreciated by those skilled in the art that the preceding examples are not limiting. It is intended that permutations, enhancements, equivalents, and improvements thereto are apparent to those skilled in the art upon a reading of the specification and a study of the drawings are included within the true spirit and scope of the present disclosure. It is therefore intended that the following appended claims include such modifications, permutations, and equivalents as fall within the true spirit and scope of these teachings.

While various embodiments have been described above, it should be understood that they have been presented by way of example and not limitation. It will be apparent to persons skilled in the relevant art(s) that various changes in form and detail can be made therein without departing from the spirit and scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

Finally, it is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

## Claims

1. A method for optimizing language model inference, comprising:
receiving, by a multi-label classifier of at least one processor, a user query;
analyzing, by the multi-label classifier, the user query to determine a layer configuration for a large language model (LLM), the layer configuration specifies which layers of the **LLM** to activate or deactivate;
configuring, by the multi-label classifier, the **LLM** to activate or deactivate the layers according to the layer configuration;
processing, by the **LLM** configured according to the layer configuration, the user query to generate a response; and
outputting the generated response.

2. The method of claim 1, wherein analyzing the user query comprises:
extracting, by the multi-label classifier, features from the user query;
comparing, by the multi-label classifier, the extracted features to predetermine features that correspond to a predetermined layer configuration; and
selecting, by the multi-label classifier, the predetermined layer configuration as the layer configuration.

3. The method of claim 2, wherein the extracted features comprise at least one of query length, complexity metrics, topic indicators, or linguistic characteristics.

4. The method of claim 1 or 2, further comprising:
checking, by the multi-label classifier, a confidence level of the determined layer configuration; and
adjusting, by the multi-label classifier, the layer configuration in response to the confidence level being below a predetermined threshold.

5. The method of any preceding claim, further comprising:
training, by the multi-label classifier, based on a training dataset including user queries and corresponding **LLM** outputs to determine predetermined layer configurations that correspond to predetermined query features.

6. The method of claim 5, further comprising:
processing, by the multi-label classifier, each of the user queries in the training dataset through an **LLM** having all layers activated to generate a gold standard response;
randomly deactivating, by the multi-label classifier, layers of the LLM;
determining, by the multi-label classifier, performance of the **LLM** with the randomly deactivated layers; and
selecting, by the multi-label classifier, the layer configuration with the randomly deactivated layers in response to the layer configuration meeting predetermined performance metrics.

7. The method of claim 6, further comprising:
iteratively adjusting, by the multi-label classifier, the layer configuration and evaluating the performance of each iterative adjustment to identify an optimal layer configuration for each user query in the training dataset.

8. The method of any of claims 5 to 7, further comprising:
extracting, by the multi-label classifier, features from each user query in the training dataset;
associating, by the multi-label classifier, the extracted features with an optimal layer configuration; and
training, by the multi-label classifier, to predict optimal layer configurations based on the extracted features.

9. The method of any of claims 5 to 8, further comprising:
periodically updating, by the multi-label classifier, the training dataset with new user queries and their corresponding **LLM** outputs;
re-training, by the multi-label classifier, using the updated training dataset; and
deploying, by the multi-label classifier, the re-trained multi-label classifier for analyzing subsequent user queries.

10. The method of any of claims 5 to 9, further comprising:
categorizing, by the multi-label classifier, the user queries in the training dataset based on complexity and topic;
determining, by the multi-label classifier, optimal layer configurations for each category of the user queries; and
training, by the multi-label classifier, to predict layer configurations based on the categorization of the user queries.

11. A system for optimizing language model inference, comprising:
a large language model (LLM); and
at least one processor operating a multi-label classifier configured to:
receive a user query,
analyze the user query to determine a layer configuration for the LLM, the layer configuration specifies which layers of the LLM to activate or
deactivate,
configure the LLM to activate or deactivate the layers according to the layer configuration,
process the user query by the LLM configured according to the layer configuration to generate a response, and
output the generated response.

12. The system of claim 11, wherein the multi-label classifier is configured to perform functionality corresponding to the steps of any of claims 2 to 10.

13. A computer readable medium comprising instruction that, when executed by the one or more processors of a computer system, cause the computer system to perform the method of any of claim 1 to 10.
